# EUROPÄISCHE PATENTANMELDUNG

(11) **EP 1 816 659 A1**
(43) Veröffentlichungstag der Anmeldung: **08.08.2007**
(21) Anmeldenummer: 06101190.4
(22) Anmeldetag: 02.02.2006
(51) Int. Cl.: H01F 38/14

(54) **Elektrisches Haushaltsgerätesystem**

(71) Anmelder: Efbe Elektrogeräte GmbH, 07422 Bad Blankenburg (DE)
(72) Erfinder: Heinze, Bernd, 07426, Königsee (DE)
(74) Vertreter: Reitstötter - Kinzebach

(57) **Zusammenfassung**

Die Erfindung betrifft ein elektrisches Haushaltsgerätesystem, das eine Gerätebasis (11) und wenigstens ein schnurloses elektrisches Haushaltsgerät (13) umfasst, das auf der Gerätebasis (11) abnehmbar angeordnet werden kann, wobei die Gerätebasis (11) eine Auflagefläche (12) für das wenigstens eine schnurlose elektrische Haushaltsgerät (13) und erste elektrische Verbindungsmittel (22) zur Übertragung von elektrischer Energie von der Gerätebasis zu dem Haushaltsgeräte (13) aufweist, und wobei das wenigstens eine schnurlose elektrische Haushaltsgerät (13) wenigstens einen elektrischen Verbraucher (21) und zweite elektrische Verbindungsmittel (27) aufweist, die mit den ersten elektrischen Verbindungsmitteln (22) der Gerätebasis derart koppelbar sind, dass elektrische Energie von den ersten elektrischen Verbindungsmitteln (22) über die zweiten elektrischen Verbindungsmittel (27) an den elektrischen Verbraucher (21) des schnurlosen elektrischen Haushaltsgeräts (13) übertragen werden können. Das erfindungsgemäße Haushaltsystem ist dadurch gekennzeichnet, dass die ersten und zweiten Verbindungsmittel (22,27) Mittel zur induktiven Übertragung von elektrischer Energie von der Gerätebasis (11) zu dem schnurlosen elektrischen Haushaltsgerät (13) aufweisen. Die Erfindung betrifft außerdem an den Einsatz in einem solchen System angepasste Gerätebasen und Haushaltsgeräte.

## Beschreibung

Die vorliegende Erfindung betrifft ein elektrisches Haushaltsgerätesystem, das eine Gerätebasis und wenigstens ein schnurloses elektrisches Haushaltsgerät, insbesondere ein schnurloses Küchengerät, umfasst, das auf der Gerätebasis abnehmbar angeordnet werden kann. Die Erfindung betrifft insbesondere berührungslose Energieübertragungsmittel für ein solches Haushaltsgerätesystem, welche elektrische Energie von der Gerätebasis auf das schnurlose Haushaltsgerät übertragen.

Elektrische Haushaltsgerätesysteme mit einer Gerätebasis und elektrischen Verbindungsmitteln zur Übertragung von elektrischem Strom auf schnurlose Haushaltsgeräte sind bekannt. Die Gerätebasis dieser Systeme weist üblicherweise eine Auflagefläche für das schnurlose elektrische Haushaltsgerät und erste elektrische Verbindungsmittel zur Übertragung von elektrischer Energie von der Gerätebasis zu dem wenigstens einen elektrischen schnurlosen Haushaltsgerät aufweist. Das schnurlose Haushaltsgerät weist einen elektrischen Verbraucher und zweite elektrische Verbindungsmittel auf, wobei die zweiten elektrischen Verbindungsmittel mit dem ersten elektrischen Verbindungsmittel der Gerätebasis derart koppelbar sind, dass elektrische Energie von den ersten elektrischen Verbindungsmitteln über die zweiten elektrischen Verbindungsmitteln an den wenigstens einen elektrischen Verbraucher übertragen wird. Üblicherweise sind die elektrischen Verbindungsmittel als komplementäre Steckverbinder ausgebildet. Die meisten Steckverbinder verlangen eine genaue Positionierung und räumliche Orientierung der beiden komplementären Komponenten zueinander. In einer moderneren Ausführungsform sind die elektrischen Verbinder als sogenannte 360°-Steckverbinder ausgebildet, die eine winkelunabhängige Positionierung des Haushaltsgeräts auf der Gerätebasis erlauben. Derartige 360°-Steckverbinder werden beispielsweise von den britischen Firmen Otter Controls Ltd. und Strix Ltd. hergestellt und vertrieben. Beispielhaft für derartige Verbinder sei auf das europäische Patent EP 0 922 426 B1 der Firma Otter Controls verwiesen. In dem deutschen Gebrauchsmuster DE 297 02 211 U1 wird eine Gerätebasis oder Grundplatte beschrieben, auf der mehrere Sockelelemente von 360°-Verbinder angeordnet sind, so dass mehrere Haushaltsgeräte gleichzeitig auf der gleichen Gerätebasis betrieben werden können.

Nachteilig an den bekannten elektrischen Haushaltsgerätesystemen ist zum einen die Tatsache, dass selbst die modernen 360°-Steckverbinder eine genaue Positionierung des Haushaltsgeräts auf dem auf der Gerätebasis angeordneten Sockel des Steckverbinders erfordern, da die in diesem Fall meist ringförmig ausgebildeten elektrischen Kontakte exakt ineinander greifen müssen. Nachteilig ist außerdem, dass die Ausführung als schnurloses Haushaltsgerät, insbesondere im Bereich der Küchengeräte, derzeit im wesentlichen auf Wasserkocher beschränkt ist. Andere Haushaltsgeräte, wie Kaffeemaschinen, Toaster, Mixer usw. sind üblicherweise direkt über ein Stromkabel mit einem Stromnetz des Haushalts verbunden. Auch bei den weitverbreiteten schnurlosen Wasserkochern ist die Gerätebasis typischerweise als separates Bauteil ausgebildet, das auf der Küchenarbeitsplatte platziert und über ein Stromkabel an einen Netzstecker angeschlossen wird. Auch in diesem Fall wird daher der freie Arbeitsbereich auf der Küchenarbeitsplatte eingeschränkt und das zum Netzstecker führende Kabel des Gerätesockels erweist sich bei vielen Arbeitsabläufen in der Küche als störend und hinderlich. Zudem stellen die zahlreichen freigeführten Kabel der Küchengeräte eines Haushalts eine Gefahrenquelle dar, denn es besteht stets die Gefahr, dass der Benutzer beim Hantieren mit verschiedensten Küchengeräten und anderen Utensilien an diesen Kabeln hängen bleibt und beispielsweise einen Wasserkocher mit heißem Wasser oder eine Fritteuse mit heißem Fett umstößt und dadurch schwerwiegende Verbrennungen erleidet. Darüber hinaus stellen die nur mäßig geschützten elektrischen Kontakte herkömmlicher Steckverbinder eine Gefahrenquelle für unvorsichtige Benutzer und insbesondere für spielende Kinder dar.

Der vorliegenden Erfindung liegt daher das technische Problem zu Grunde, ein elektrisches Haushaltsgerätesystem anzugeben, welches einerseits eine wesentlich flexiblere Versorgung von elektrischen Haushaltsgeräten mit Energie ermöglicht und andererseits das Konzept des schnurlosen Betriebs von Haushaltsgeräten auf möglichst viele Gerätetypen, insbesondere auf unterschiedlichste Küchengeräte ausdehnt. Ferner soll das erfindungsgemäße elektrische Haushaltsgerätesystem dazu beitragen, das bisher übliche Kabelgewirr auf den Arbeits- und Küchenplatten drastisch zu reduzieren.

Gelöst wird dieses technische Problem durch das elektrische Haushaltsgerätesystem mit den Merkmalen des vorliegenden Patentanspruchs 1. Vorteilhafte Weiterbildungen des erfindungsgemäßen Haushaltsgerätesystems sind Gegenstände der abhängigen Ansprüche.

Die Erfindung betrifft demnach ein elektrisches Haushaltsgerätesystem, das eine Gerätebasis und wenigstens ein schnurloses elektrisches Haushaltsgerät umfasst, das auf der Gerätebasis abnehmbar angeordnet werden kann, wobei die Gerätebasis eine Auflagefläche für das wenigstens eine schnurlose elektrische Haushaltsgerät und elektrische Verbindungsmittel zum Übertragen von elektrischer Energie von der Gerätebasis zu dem Haushaltsgerät aufweist und wobei das wenigstens eine schnurlose elektrische Haushaltsgerät wenigstens einen elektrischen Verbraucher und zweite elektrische Verbindungsmittel aufweist, die mit den ersten elektrischen Verbindungsmitteln der Gerätebasis derart koppelbar sind, dass elektrische Energie von den ersten elektrischen Verbindungsmitteln über die zweiten elektrischen Verbindungsmittel an den elektrischen Verbraucher des schnurlosen elektrischen Haushaltsgeräts übertragen werden kann, wobei das erfindungsgemäße Haushaltsgerätesystem dadurch gekennzeichnet ist, dass die ersten und zweiten Verbindungsmittel Mittel zur induktiven Übertragung von elektrischer Energie von der Gerätebasis zu den schnurlosen elektrischen Haushaltsgeräten aufweisen.

Durch Verwendung eines induktiven elektrischen Energieübertragungssystems ist bei der vorliegenden Erfindung im Gegensatz zu den elektrischen Verbindern des Standes der Technik kein direkter, elektrisch leitender Kontakt zwischen den ersten und zweiten elektrischen Verbindungsmitteln mehr erforderlich. Bei der induktiven Kopplung von Gerätebasis und Haushaltsgerät wird die elektrische Energie vielmehr über ein von den ersten Verbindungsmitteln erzeugtes elektromagnetisches Feld auf die zweiten Verbindungsmittel übertragen. Im Gegensatz zu den üblicherweise für schnurlose Geräte verwendeten 360°-Steckverbindern müssen die ersten und zweiten Verbindungsmittel also nicht mehr in unmittelbarem Kontakt stehen, sondern es genügt, wenn sich die zweiten Verbindungsmittel des Haushaltsgeräts in dem von dem ersten Verbindungsmittel erzeugten elektromagnetischen Feld befinden. Eine exakte Positionierung des Haushaltsgeräts auf der Gerätebasis ist daher nicht mehr erforderlich. Ein derartiges Energieübertragungssystem ist universell verwendbar, so dass es sich insbesondere auch für Haushaltsgeräte eignet, die bislang nicht als schnurlose Geräte hergestellt worden sind.

Vorzugsweise umfassen die Mittel zur induktiven Übertragung von elektrischer Energie wenigstens eine in den ersten elektrischen Verbindungsmitteln der Gerätebasis angeordnete Primärspule, die von einem elektrischen Wechselstrom gespeist wird, und wenigstens eine in den zweiten elektrischen Verbindungsmitteln des schnurlosen elektrischen Haushaltsgeräts angeordnete Sekundärspule. Die Primärspule wird, beispielsweise über einen geeigneten Frequenzumricher, mit einem Wechselstrom einer Frequenz von 20 bis 200 kHz, vorzugsweise von 50 bis 150 kHz und besonders bevorzugt von etwa 100 kHz gespeist. Das von der Primärspule erzeugte elektromagnetische Wechselfeld induziert einen Wechselstrom in der Sekundärspule des schnurlosen Haushaltsgeräts. Zur Verbesserung der magnetischen Kopplung im Betrieb kann man die Induktivitäten der Spulen erhöhen. Dazu können die Primärspule und/oder die Sekundärspule beispielsweise einen Ferritkern aufweisen.

Gemäß einer ersten Variante wird der induzierte Wechselstrom über eine geeignete Schaltung unmittelbar an den elektrischen Verbraucher des schnurlosen Haushaltsgeräts abgegeben. Gemäß einer zweiten Variante umfassen die zweiten elektrischen Verbindungsmittel einen Gleichrichter, der den in der Sekundärspule induzierten Wechselstrom gleichrichtet und als Gleichstrom an den Verbraucher des schnurlosen Haushaltsgeräts abgibt.

Die mit dem erfindungsgemäßen Haushaltsgerätesystem übertragbare elektrische Leistung beträgt vorzugsweise bis zu 1 kW, besonders bevorzugt bis zu 5 kW.

Im Allgemeinen ist die Oberseite der Auflagefläche der Gerätebasis an die Form der Unterseite des Haushaltsgeräts angepasst, so dass die beiden Komponenten im Betrieb sicher zusammengefügt werden können. Gemäß einer besonders bevorzugten Ausführungsform des erfindungsgemäßen Haushaltsgerätesystems ist die Auflagefläche der Gerätebasis im Wesentlichen eben. In diesem Fall ist vorteilhafterweise auch die Unterseite des Haushaltsgeräts eben. Eine ebene Auflagefläche ermöglicht einerseits einen stabilen und sicheren Stand des Haushaltsgeräts auf der Gerätebasis. Andererseits lässt sich die Gerätebasis leicht reinigen, da im Gegensatz zu üblichen Steckverbindern keine aus der Oberfläche herausragenden Bauelemente vorhanden sind. Die Auflagefläche besteht dabei vorzugsweise aus einem für elektromagnetische Wellen, insbesondere für Magnetfelder weitgehend transparenten Material, beispielsweise aus einem Glaskeramik- und Kunststoffmaterial, welches die ersten elektrischen Verbindungsmittel vollständig bedeckt. Die elektrischen Anschlüsse der ersten elektrischen Verbindungsmittel sind bei dem erfindungsgemäßen Haushaltsgerätesystem demnach nach oben elektrisch völlig abgeschirmt, so dass insbesondere kein leitender Kontakt zur Oberseite Auflagefläche hergestellt werden kann. Die Erfindung trägt damit entscheidend zur Verbesserung der Sicherheit im Haushalt bei, denn im Gegensatz zur Verwendung von herkömmlichen elektrischen Steckverbindern können beispielsweise spielende Kinder auch bei Benutzung von Messern, Gabeln oder anderen im Haushalt vorhandenen spitzen Werkzeugen keinen elektrisch leitenden Kontakt mit den elektrischen Anschlüssen der ersten Verbindungsmittel herstellen.

Gemäß einer Ausführungsform ist die Gerätebasis als separates Bauteil ausgebildet, und kann auf vorhandenen Arbeitsflächen im Haushalt angeordnet werden. In diesem Fall wird die Gerätebasis über ein Netzkabel an das Stromnetz angeschlossen. Diese Variante eignet sich insbesondere zum Nachrüsten existierender Küchen mit dem erfindungsgemäßen System. Besonders bevorzugt ist die Gerätebasis jedoch als Einbauelement für eine Küchenplatte ausgebildet oder stellt selbst eine Küchenplatte bzw. Arbeitsplatte dar. Als Einbauelement oder als komplette Arbeitsplatte kann die Gerätebasis des erfindungsgemäßen Haushaltsgerätesystem so ausgebildet sein, dass eine mit der Arbeitsfläche bündig abschließende Fläche gebildet wird, was beispielsweise im Hinblick auf dadurch erleichterte Reinigung der Fläche, die sichere Handhabung der Geräte und die Arbeitssicherheit insgesamt vorteilhaft ist. In diesem Fall verlaufen die elektrischen Anschlüsse der ersten Verbindungsmittel vorzugsweise unter der Auflagefläche der Küchenarbeitsplatte, so dass das in der Küche durch den Betrieb verschiedenster elektrischer Haushaltsgeräte übliche Kabelgewirr auf der Arbeitsplatte drastisch reduziert wird. Die Gerätebasis kann einen oder mehrere aktivierbare Arbeitsplätze umfassen, auf denen verschiedenste elektrische Haushaltsgeräte angeordnet und betrieben werden können.

Auch die vorzugsweise ebenfalls ebene Standfläche des schnurlosen Haushaltsgeräts weist eine Bodenplatte auf, welche die Sekundärspule und die weiteren elektrischen Komponenten der zweiten elektrischen Verbindungsmittel vor direkten Kontakten isoliert. Die Primär- bzw. Sekundärspulen sind dabei derart angeordnet und von einer Auflagefläche einer solchen Dicke bedeckt, dass der Abstand zwischen Primär- und Sekundärspule beim Betrieb des elektrischen Haushaltsgeräts etwa 5 bis 20 mm vorzugsweise etwa 10 mm beträgt.

Die Primärspule und die Sekundärspule besitzen vorzugsweise etwa den gleichen Durchmesser. In diesem Fall können die im wesentlich senkrecht zu der Auflagefläche bzw. der Stellfläche des Haushaltsgeräts orientierten Achsen der Primär- und Sekundärspule etwa 10 bis 20 mm gegeneinander versetzt sein, ohne dass eine nennenswerte Verringerung der magnetischen Kopplung von Primär- und Sekundärspule registriert wird. Der Benutzer muss also beim Positionieren des Haushaltsgeräts auf der Gerätebasis nicht mehr Sorgfalt walten lassen, als er es beispielsweise von Kochfeldern her gewohnt ist. In jedem Fall erlaubt das erfindungsgemäße Haushaltsgerätesystem eine wesentlich größere Positioniertoleranz als herkömmliche elektrische Steckverbindungen.

Gemäß einer Variante der Erfindung können die ersten elektrischen Verbindungsmittel der Gerätebasis universell ausgebildet sein und mit einer Vielzahl von zweiten elektrischen Verbindungsmitteln unterschiedlichster Haushaltsgeräte zusammenwirken. Die Primärspule der ersten elektrischen Verbindungsmittel erzeugt dann ein für die verschiedensten Haushaltsgeräte ausreichend starkes elektromagnetisches Feld, in welches das schnurlose Haushaltsgerät über seine Sekundärspule einkoppelt.

Besonders bevorzugt weist das erfindungsgemäße Haushaltsgerätesystem zumindest Mittel auf, mit denen die Gerätebasis erkennen kann, ob ein schnurloses Haushaltsgerät auf der Gerätebasis angeordnet ist. Eine entsprechende Annäherungssensorik kann beispielsweise mit einem Reed-Kontakt realisiert werden, der in der Gerätebasis angeordnet ist und bei Annäherung eines schnurlosen Haushaltsgeräts durch in dem Haushaltsgerät angeordnete Magnete ausgelöst wird. Gemäß einer weiteren Variante kann die Gerätebasis auch Mittel zur Erkennung des Typs des auf der Auflagefläche angeordneten schnurlosen Haushaltsgeräts umfassen. Beispielsweise kann in jedem Haushaltsgerät ein RFID-Transponder angeordnet sein, welcher eine Gerätekennung an einen RFID-Reader in der Gerätebasis überträgt. Die entsprechenden Informationen können dann von einem Mikrokontroller der Gerätebasis ausgewertet und in geeignete Steuersignale für die Primärspule umgesetzt werden. Je nach erkanntem Gerätetyp kann dann beispielsweise die Leistung der Primärspule eingestellt werden. Die ersten elektrischen Verbindungsmittel können beispielsweise auch mehrere konzentrisch angeordnete Primärspulen aufweisen, so dass abhängig von dem erkannten Haushaltsgerät die für das jeweilige Haushaltsgerät passende Primärspule mit Strom gespeist werden kann. Dadurch lässt sich die Größe des erzeugten elektromagnetischen Feldes flexibel an den jeweiligen Haushaltsgerätetyp anpassen.

Das schnurlose elektrische Haushaltsgerät kann in unterschiedlichsten Ausführungen realisiert werden. Es kann beispielsweise ein Wasserkocher, eine Kaffeemaschine, ein Toaster, ein Eierkocher, eine Saftpresse, ein Waffeleisen, ein Sandwichmaker, eine Wokschale, ein Allesschneider, ein Standmixer oder ein Entsafter sein.

Gegenstand der vorliegenden Erfindung ist auch eine Gerätebasis für das erfindungsgemäße Haushaltsgerätesystem, welche eine im Wesentlichen ebene Auflagefläche aufweist, unter der eine wechselstromgespeiste Primärspule angeordnet ist.

Gegenstand der Erfindung sind schließlich auch schnurlose elektrische Haushaltsgeräte, welche für die Verwendung in dem erfindungsgemäßen Haushaltsgerätesystem dadurch angepasst sind, dass sie eine im wesentlichen ebene Standfläche aufweisen, über der im Inneren des Haushaltsgeräts eine Sekundärspule angeordnet ist, die einen elektrischen Verbraucher des Haushaltsgeräts mit elektrischer Energie aus einem umgebenden elektromagnetischen Wechselfeld speisen kann.

Die Erfindung wird im Folgenden an Hand eines in der beigefügten Zeichnung dargestellten bevorzugten Ausführungsbeispiels näher erläutert.

In der Zeichnung zeigt:
- Figur 1: eine schematische Darstellung einer bevorzugten Ausführungsform des erfindungsgemäßen elektrischen Haushaltsgerätesystems mit einer als Arbeitsplatte ausgebildeten Gerätebasis und einem Wasserkocher als schnurlosem Haushaltsgerät;
- Figur 2: einen schematische Teilschnitt des Haushaltsgerätesystems der Figur 1, wobei der schnurlose Wasserkocher auf der Gerätebasis angeordnet ist; und
- Figur 3: einen beispielhaften Schaltplan des elektrischen Sekundärmoduls des schnurlosen Wasserkochers der Figuren 1 und 2.

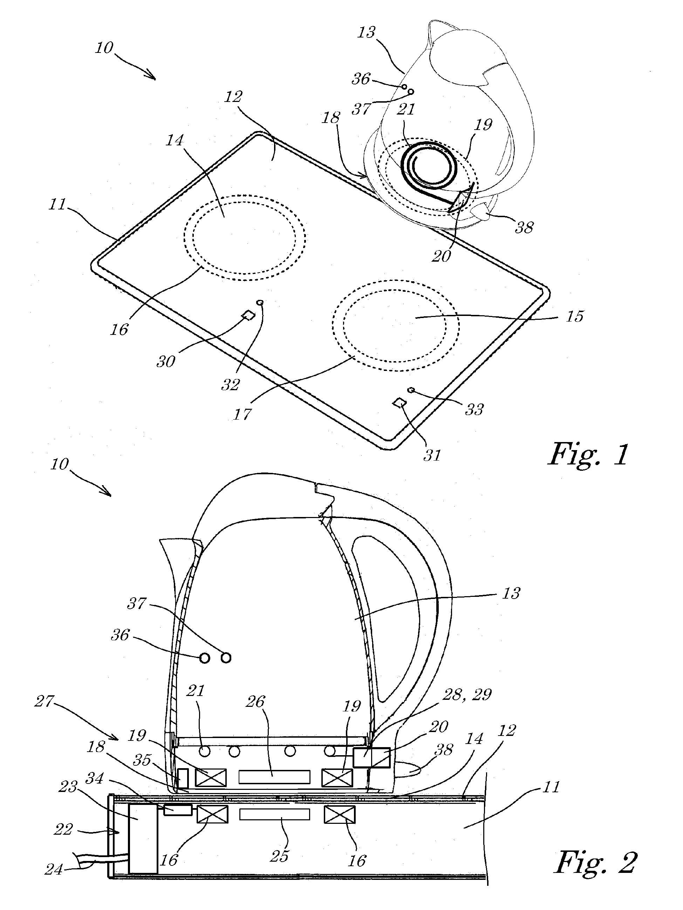

In den Figuren 1 und 2 wird eine bevorzugte Ausführungsform des elektrischen Haushaltsgerätesystems insgesamt mit der Bezugsziffer 10 dargestellt. Das Haushaltsgerätesystem 10 umfasst eine als Arbeitsplatte 11 ausgebildete Gerätebasis, die eine ebene Auflagefläche 12 für ein im dargestellten Beispiel als Wasserkocher 13 ausgebildetes schnurloses elektrisches Haushaltsgerät aufweist.

Im dargestellten Beispiel weist die Gerätebasis 11 zwei Arbeitsbereiche 14, 15 auf, die durch zwei unter der Auflagefläche 12 angeordnete Primärspulen 16, 17 der ersten elektrischen Verbindungsmittel der Gerätebasis 11 definiert werden. Im dargestellten Beispiel können also zwei schnurlose Haushaltsgeräte gleichzeitig betrieben werden. Selbstverständlich kann die Gerätebasis 11 auch nur einen durch eine Primärspule definierten Arbeitsbereich oder mehr als zwei Arbeitsbereiche aufweisen.

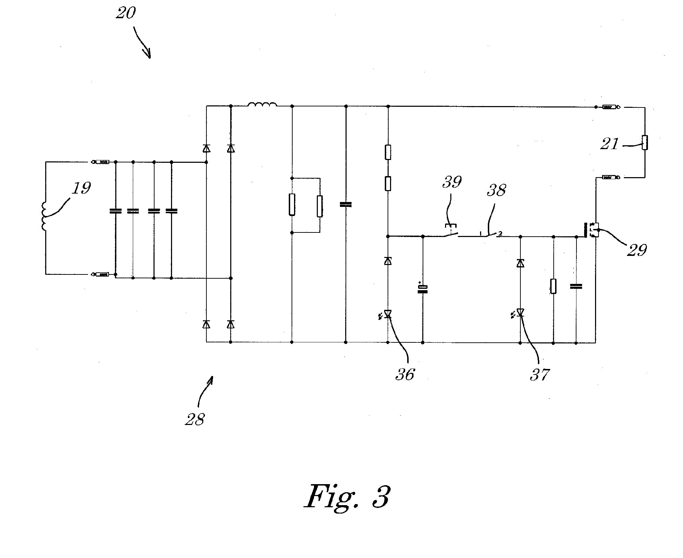

Der schnurlose Wasserkocher 13 weist eine ebene Stellfläche 18 auf, über der eine Sekundärspule 19 angeordnet ist. Über eine in Figur 3 schematisch dargestellte sekundärseitige Schaltung 20 wird ein als Heizspirale 21 ausgebildete elektrische Verbraucher des schnurlosen Wasserkochers 13 mit elektrischer Energie versorgt. In Figur 3 werden die elektrischen Symbole von Bauteilen, die bereits in den Figuren 1 oder 2 dargestellt sind, der Einfachheit halber mit denselben Bezugsziffern bezeichnet.

Wie man insbesondere im Teilschnitt der Figur 2 erkennt, wo der Wasserkocher auf dem Arbeitsfeld 14 der Auflagefläche 12 der Gerätebasis 11 angeordnet ist, umfassen die ersten elektrischen Verbindungsmittel 22 neben der Primärspule 16 einen die Spule mit einer elektrischen Leistung von 1 kW und einer Speisefrequenz von 100 kHz versorgenden Frequenzumrichter 23, der über ein in der Figur nur angedeutetes Netzkabel 24 vom Haushaltsstromnetz gespeist wird. Das von der Primärspule 16 erzeugte elektromagnetische Wechselfeld induziert in der Sekundärspule 19 des schnurlosen Wasserkochers 13, die unmittelbar über der dessen Stellfläche 18 angeordnet ist, einen Wechselstrom. In der in Figur 2 dargestellten Position beträgt der Abstand der Primärspule 16 von der Sekundärspule 19 etwa 10 mm. Zur Verbesserung der induktiven Kopplung sind die Primärspule 16 und die Sekundärspule 19 im dargestellten Beispiel jeweils mit Ferritkernen 25, 26 versehen.

Die zweiten elektrischen Verbindungsmittel 27 umfassen neben der Sekundärspule 19 einen Gleichrichter 28 der den in der Sekundärspule induzierten Wechselstrom in einen geglätteten, gleichgerichteten Strom umwandelt. Der gleichgerichtete Strom wird über einen Halbleiterschalter 29, beispielsweise über einen Insulated Gate Bipolar Transistor (IGBT), an die Heizspirale 21 des Wasserkochers übertragen (vergleiche insbesondere Fig. 3).

Im dargestellten Beispiel erfolgt wird Betrieb des erfindungsgemäßen elektrischen Haushaltsgerätesystems 10 wie folgt:

Über einen gemeinsamen (oder, wie in Figur 1 gezeigt, einen für jede Primärspule 16, 17 separat vorgesehenen) Hauptschalter 30, 31 werden ein oder mehrere Frequenzumrichter 23 eingeschaltet. Die Einsatzbereitschaft der Gerätebasis wird über eine oder mehrere in der Auflagefläche 12 angeordnete lichtemittierende Dioden 32, 33 angezeigt. In diesem Bereitschaftszustand ist die elektrische Verbindung zwischen Frequenzumrichter und Primärspule noch unterbrochen. Sobald sich der Wasserkocher 13 der Auflagefläche 12 nähert und in den Wirkbereich der Primärspule 16 gelangt, wird die Energieübertragung mittels eines dem Frequenzumrichter 23 nachgeschalteten Reed-Kontakt 34 aktiviert. Dazu sind in dem schnurlosen Wasserkocher 13 sind im Bereich von dessen Stellfläche 18 Permanentmagneten 35 angeordnet, die bei Annäherung an die Auflagefläche 12 den Reed-Kontakt 34 auslösen. Das dann von der Primärspule 16 erzeugte magnetische Wechselfeld induziert in der Sekundärspule 19 einen entsprechenden Wechselstrom. Eine am Außenmantel 35 des Wasserkochers 13 angeordnete Bereitschaftsanzeige, beispielsweise eine grün leuchtende LED 36, signalisiert die Betriebsbereitschaft des Wasserkochers 13. Eine zweite LED, beispielsweise eine rote LED 37, dient als Betriebsanzeige, die signalisiert, ob der Verbraucher des schnurlosen Wasserkochers, als die Heizspirale 21, in Betrieb ist. Das Zuschalten der Heizspirale kann automatisch über den Halbleiterschalter 29 erfolgen. Zusätzlich weist der Wasserkocher 13 aber auch einen mechanischen Schalter 38 auf. Der Wasserkocher kann außerdem eine an sich bekannte Abschalteinrichtung, beispielsweise mittels eines Dampfsensors, aufweisen. Zusätzlich weist der Wasserkocher auch eine Sicherheitseinrichtung auf, die beispielsweise eine automatische Abschaltung bei Überhitzung mittels eines Bimetallschalters 39 (Fig.3) ermöglicht. Es kann demnach ein selbstständiges oder ein manuelles Abschalten des Verbrauchers nach Beendigung des Betriebs vorgesehen sein. Nach Abschaltung erlischt die rote Betriebs-LED 37, während die grüne Bereitschafts-LED 36 so lange leuchtet, wie die Primärspule 16 das elektromagnetische Wechselfeld erzeugt, beziehungsweise so lange sich der schnurlose Wasserkocher 13 im Einwirkungsbereich dieses Feldes befindet.

## Patentansprüche

1. Elektrisches Haushaltsgerätesystem, das eine Gerätebasis (11) und wenigstens ein schnurloses elektrisches Haushaltsgerät (13) umfasst, das auf der Gerätebasis (11) abnehmbar angeordnet werden kann,
wobei die Gerätebasis (11) eine Auflagefläche (12) für das wenigstens eine schnurlose elektrische Haushaltsgerät (13) und erste elektrische Verbindungsmittel (22) zur Übertragung von elektrischer Energie von der Gerätebasis zu dem Haushaltsgeräte (13) aufweist,
und wobei das wenigstens eine schnurlose elektrische Haushaltsgerät (13) wenigstens einen elektrischen Verbraucher (21) und zweite elektrische Verbindungsmittel (27) aufweist, die mit den ersten elektrischen Verbindungsmitteln (22) der Gerätebasis derart koppelbar sind, dass elektrische Energie von den ersten elektrischen Verbindungsmitteln (22) über die zweiten elektrischen Verbindungsmittel (27) an den elektrischen Verbraucher (21) des schnurlosen elektrischen Haushaltsgeräts (13) übertragen werden können,
**dadurch gekennzeichnet,**
**dass** die ersten und zweiten Verbindungsmittel (22,27) Mittel zur induktiven Übertragung von elektrischer Energie von der Gerätebasis (11) zu dem schnurlosen elektrischen Haushaltsgerät (13) aufweisen.

2. Haushaltsgerätesystem gemäß Anspruch 1, **dadurch gekennzeichnet, dass** die Mittel zur induktiven Übertragung von elektrischer Energie wenigstens eine, in den ersten elektrischen Verbindungsmitteln (22) der Gerätebasis (11) angeordnete Primärspule (16,17), die von einem elektrischen Wechselstrom gespeist wird, und wenigstens eine in den zweiten elektrischen Verbindungsmitteln (27) des schnurlosen elektrischen Haushaltsgeräts (13) angeordnete Sekundärspule (19) umfassen.

3. Haushaltsgerätesystem gemäß Anspruch 2, **dadurch gekennzeichnet, dass** der die Primärspule (16) speisende Wechselstrom eine Frequenz von 20 - 200 kHz, vorzugsweise von 50-150 kHz und besonders bevorzugt von etwa 100 kHz aufweist.

4. Haushaltsgerätesystem einem der Ansprüche 2 oder 3, **dadurch gekennzeichnet, dass** die zweiten elektrischen Verbindungsmittel (27) einen Gleichrichter (28) umfassen, über den eine Gleichstrom an den Verbraucher (21) des schnurlosen elektrischen Haushaltsgeräts abgegeben wird.

5. Haushaltsgerätesystem einem der Ansprüche 1 bis 4, **dadurch gekennzeichnet, dass** die übertragbare elektrische Energie eine Leistung von bis zu 1 kW, vorzugsweise bis zu 5 kW aufweist.

6. Haushaltsgerätesystem gemäß einem der Ansprüche 1 bis 5, **dadurch gekennzeichnet, dass** die Auflagefläche (12) der Gerätebasis (11) im wesentlichen eben ist.

7. Haushaltsgerätesystem gemäß Anspruch 6, **dadurch gekennzeichnet, dass** die Gerätebasis (11) als Einbauelement in eine Küchenarbeitsplatte ausgebildet ist.

8. Haushaltsgerätesystem gemäß einem der Ansprüche 6 oder 7, **dadurch gekennzeichnet, dass** das schnurlose Haushaltsgerät (13) eine im wesentliche ebene Standfläche (18) aufweist.

9. Haushaltsgerätesystem gemäß einem der Ansprüche 2 bis 7, **dadurch gekennzeichnet, dass** der Abstand zwischen der Primärspule (16,17) und der Sekundärspule (19) bei auf der Auflagefläche (12) angeordnetem Haushaltsgerät (13) zwischen 5 und 20 mm, vorzugsweise etwa 10 mm beträgt.

10. Haushaltsgerätesystem gemäß einem der Ansprüche 1 bis 9, **dadurch gekennzeichnet, dass** die Gerätebasis (11) Mittel zur Erkennung eine auf der Auflagefläche (12) angeordneten schnurlosen Haushaltsgeräts (13) umfasst.

11. Haushaltsgerätesystem gemäß Anspruche 10, **dadurch gekennzeichnet, dass** die Mittel zur Erkennung des Haushaltsgeräts wenigstens einen Reed-Kontakt (34) umfassen, der bei Annäherung wenigstens eines in dem Haushaltsgerät (13) angeordneten Magneten (35) ausgelöst wird.

12. Haushaltsgerätesystem gemäß einem der Ansprüche 1 bis 11, **dadurch gekennzeichnet, dass** das schnurlose elektrische Haushaltsgerät ein Wasserkocher, eine Kaffeemaschine, ein Toaster, ein Eierkocher, eine Saftpresse, ein Allesschneider, ein Sandwichmaker, ein Waffeleisen, ein Wokschale oder ein Mixer ist.

13. Gerätebasis für ein Haushaltsgerätesystem nach einem der Ansprüche 1 bis 12, mit einer im wesentlichen ebenen Auflagefläche (12), unter der wenigstens eine wechselstromgespeiste Primärspule (16, 17) angeordnet ist.

14. Schnurloses elektrisches Haushaltsgerät für ein Haushaltsgerätesystem nach einem der Ansprüche 1 bis 12, mit einer im wesentlichen ebenen Standfläche (18), über der eine Sekundärspule (19) angeordnet ist, die einen elektrischen Verbraucher (21) des Haushaltsgeräts mit elektrischer Energie speist.

15. Haushaltsgerät gemäß Anspruch 14, **dadurch gekennzeichnet, dass** der Sekundärspule (19) ein Gleichrichter (28) nachgeschaltet ist, über den der Verbraucher (21) mit Gleichstrom versorgt wird.

16. Haushaltsgerät gemäß einem der Ansprüche 14 oder 15, **dadurch gekennzeichnet, dass** das schnurlose elektrische Haushaltsgerät ein Wasserkocher, eine Kaffeemaschine, ein Toaster, ein Eierkocher, eine Saftpresse, ein Allesschneider, ein Sandwichmaker, ein Waffeleisen, ein Wokschale oder ein Mixer ist.
